# EUROPÄISCHE PATENTANMELDUNG

(11) **EP 4 553 648 A1**
(43) Veröffentlichungstag der Anmeldung: **14.05.2025**
(21) Anmeldenummer: 23209442.5
(22) Anmeldetag: 13.11.2023
(51) Int. Cl.: G06F 8/71, G06F 9/4401, G05B 19/418, G06F 9/445

(54) **VERFAHREN UND VORRICHTUNG ZUR ERMITTLUNG UND VERWALTUNG VON INFORMATIONEN ÜBER VERFÜGBARE GERÄTE- UND/ODER SOFTWARE-ARTEFAKTE IN EINEM HETEROGENEN INDUSTRIELLEN SYSTEM, COMPUTERPROGRAMMPRODUKT UND SIGNAL**

(71) Anmelder: Siemens Aktiengesellschaft, 80333 München (DE)
(72) Erfinder: Balduf, Jochen, 76707 Hambrücken (DE); Birk, Gunther, 91054 Erlangen/Buckenhof (DE); Chidambaranathan, Senthilrajan, 600041 Chennai (IN); Cirujano Cuesta, Silvano, 81541 München (DE); K, Nallasivan, 560100 Bangalore (IN); Rehm, Andreas, 90475 Nürnberg (DE); Volevach, Vitaliy, 90763 Fürth (DE); Yeo, David, 90518 Altdorf (DE)
(74) Vertreter: Siemens Patent Attorneys

(57) **Zusammenfassung**

Das Management einer OT-Flotte konfrontiert den Betreiber und die jeweiligen Servicetechniker mit der hohen Komplexität der heterogenen Umgebung, sie müssen sich, basierend auf den eingesetzten Anlagen und Geräten, und mit einer Vielzahl von Werkzeugen zur Ver- und Bearbeitung der Informationen auseinandersetzen.

Die Erfindung betrifft einen INVENTARDIENST in einem Gesamtsystem bestehend dabei aus drei Haupt-Komponenten:
- Ein zentral gehosteter Cloud-Service , der alle Funktionen zur Unterstützung der Benutzer umfasst und verfügbar macht.
- Eine Gateway-Software, die beispielsweise in der Anlage gehostet wird, um Informationen und Wartungsfunktionen an den Backend-Dienst weiterzuleiten.
- Eine Auswahl von Asset-Links, die als Konnektor, zwischen dem (Asset) Gateway und den OT Feldgeräten fungieren.

## Beschreibung

OT bzw. Operational Technology (zu Deutsch: operative Technologie) bezeichnet die Verwendung von Hardware und Software zur Kontrolle von industriellem Equipment. OT umfasst allgemein spezialisierte Systeme, die zum Beispiel in der Fertigung, im Energiesektor, in der Medizin, in der Bautechnik und in anderen Branchen verwendet werden. Genauer gesagt sprechen wir im Folgenden von allen Geräten, die in einer industriellen Anlage zum Einsatz kommen, von der Steuerung über Antriebe, Sensorik (bspw. Kameras, Thermometer, Durchflussmesser, Geschwindigkeitsmesser ...) und Aktorik (Roboter, Förderbänder, Bearbeitungswerkzeuge etc.).

OT stellt dabei einen Gegensatz zur IT (Informationstechnologie) dar, die für Datensysteme zuständig ist. OT-Systeme werden hauptsächlich in der physischen Welt eingesetzt, während IT-Systeme vorrangig zur Lösung von geschäftlichen Problemen genutzt werden. Viele Aspekte von OT und IT überschneiden sich, da OT-Systeme in der Regel mit Netzwerken verbunden sind und immer größere Datenmengen generieren und verwenden. Das Management einer OT-Flotte konfrontiert den Betreiber und die jeweiligen Servicetechniker mit der hohen Komplexität der heterogenen Umgebung, sie müssen sich, basierend auf den eingesetzten Anlagen und Geräten, und mit einer Vielzahl von Werkzeugen zur Ver- und Bearbeitung der Informationen auseinandersetzen.

Daneben steht eine Vielzahl von Informationsquellen zur Abfrage zur Verfügung, um die notwendigen Daten zu sammeln, aktualisieren und zu verwalten.

Die Verteilung der Artefakte (also aller Elemente, die während des Entwicklungsprozesses produziert wurden, wie Datenmodelle, Prototypen, Workflow-Diagramme, Designdokumente oder Setup-Scripten)erfolgt dabei je nach Hersteller oder Anbieter auf unterschiedliche Art und Weise.

Auch die Abhängigkeitsverwaltung der Artefakte muss bislang manuell angewendet werden, da Informationen zu Abhängigkeiten nicht in einem gängigen, maschinenlesbaren Format bereitgestellt werden.

Bei der Verteilung von Artefakten (Firmware, BIOS usw.) in heterogene Umgebungen müssen viele, auch nicht-funktionale Anforderungen berücksichtigt werden.

Heute gibt es keinen umfassenden Ansatz, um das Problem hersteller- und gerätefamilienübergreifend anzugehen. In der Regel werden Updates von bestimmten Engineering-Tools unter Verwendung bestimmter Informationen und Vertriebskanäle angewendet, die von der jeweiligen Hersteller-/Gerätefamilie festgelegt werden.

Wartung und technischer Service müssen mit einer Vielzahl von Informationen umgehen. Servicetechniker und Betreiber der Anlagen sind dafür verantwortlich, die richtigen Artefakte mit verschiedenen Mitteln zu finden, abzugleichen und auf die OT-Assets anzuwenden.

Für Standard-Betriebssysteme, wie z.B. MS WINDOWS, gibt es beispielsweise einen betriebssystemspezifischen Dienst.

Es ist daher die Aufgabe der Erfindung, eine Lösung anzugeben für das oben beschriebene Problem. Dabei soll eine einheitliche Verwaltung angeboten werden, welche auf heterogenen OT-Umgebungen angewendet wird, um herstellerübergreifendend Informationen zu angewendeter Software und Gerätefamilien nutzbar zu machen.

Die Aufgabe wird gelöst durch ein Verfahren gemäß den Merkmalen des Patentanspruchs 1.

Weiterhin wird die Aufgabe gelöst durch ein Computerprogrammprodukt mit den Merkmalen des Patentanspruchs 6 und einer Vorrichtung gemäß den Merkmalen des Patentanspruchs 7.

Weitere vorteilhafte Ausführungsformen sind in den Unteransprüchen angegeben.

Die Erfindung wird im Weiteren in einem Ausführungsbeispiel dargestellt, dabei zeigt
Figur 1 eine Detailsicht der erfindungsgemäßen Vorrichtung, und
Figur 2 eine Übersicht über das Gesamtsystem, in dem der erfindungsgemäße Gegenstand zur Wirkung gelangt.

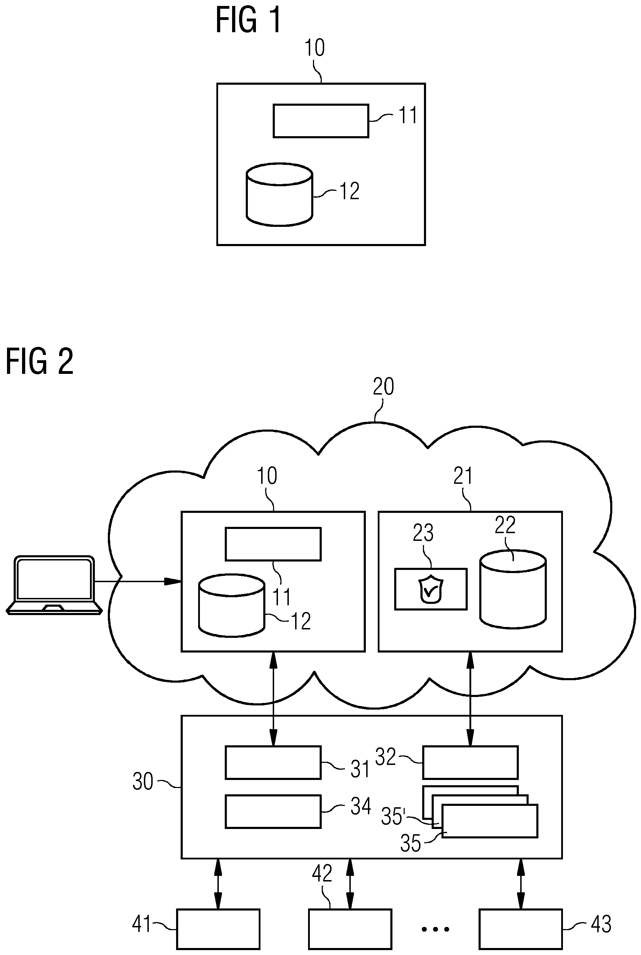

Figur 1 zeigt den INVENTARDIENST 10, welcher sich vorteilhafterweise zentral in einer Cloud 20 befinden kann. Der INVENTARDIENST 10 umfasst die INVENTARDATENBANK 12 mit erweiterten Informationen zu den gescannten Assets und ermöglicht es dem Benutzer, FUNKTIONEN 11 durchzuführen, wie:
- Neue Scans im System laufen lassen,
- Assets anzeigen,
- Filter anzuwenden und
- Asset-Informationen in andere Systeme zu exportieren.

Ein Asset ist die Repräsentation eines funktionalen Objekts mit einer technischen Funktion, die bekannt ist. Es kann sich beispielsweise um ein Gerät handeln, mit einer darauf installierten Firmware und weiterer Software. Sowohl Gerät als auch Software weisen bestimmte Attribute auf, beispielsweise die jeweilige Version von Gerät und Software.

Die einzigen Attribute, die eine Instanz dieser Klasse bereitstellen muss, sind eine eindeutiger Bezeichner ID, die auf sie verweist, und den Asset-Management-Status.

Eine Artefakt Liste kann beispielsweise als Tabelle gestaltet sein und folgende Informationen zu den vorhandenen, verwalteten Assets enthalten:
- Asset Name
- Asset Typ (z. B. Gateway)
- Hersteller
- Netzadresse (IP, MAC, ...)
- Serien Nummer
- Version (Firmware, Hardware, ...)
- Sicherheit (Schlüssel, Passwort, ...)
- Instanz
- Status
- Kunde (Tenant)

Eine Asset-Instanz kann ein physisches Objekt (z. B. ein Raspberry Pi oder eine Anwendung sein, die auf einem System ausgeführt wird) oder ein virtuelles Objekt (z. B. ein Router in einer Netzwerktopologie, unabhängig davon, um welches physische Gerät es sich handelt) darstellen. In beiden Fällen wird ein Bezeichner für das dargestellte Objekt benötigt.

Figur 2 zeigt nun diesen INVENTARDIENST 10 in der Wechselwirkung mit anderen Komponenten des Gesamtsystems.

Das beschriebene Gesamtsystem besteht dabei aus drei HauptKomponenten:
- Ein zentral gehosteter Cloud-Service 20, der alle Funktionen zur Unterstützung der Benutzer umfasst und verfügbar macht. Diese Funktionen können über eine webbasierte UI-Anwendung und offen zugängliche APIs realisiert werden. In diesem Cloud Dienst befindet sich auch die bereits unter Figur 1 beschriebene Funktionalität.
- Eine Gateway-Software 30, die beispielsweise vor Ort, also in der Anlage, gehostet wird, um Informationen und Wartungsfunktionen an den Backend-Dienst weiterzuleiten. Die Kommunikation zwischen dem (Asset) Gateway und dem Backend-Dienst wird mit Firewall-freundlichen Protokollen hergestellt.
- Eine Auswahl von Asset-Links, die als Konnektor / Middleware fungieren, zwischen dem (Asset) Gateway und den OT Feldgeräten 41, 42, 43.

Das (Asset) Gateway 30 und ein oder mehrere Asset Links werden beispielsweise auf Industrial Edge-Geräten, oder als Docker-Compose auf jeder Maschine gehostet, auf der Container ausgeführt werden können.

Als Asset Link wird die Softwarekomponente bezeichnet, die über ein spezifisches Protokoll Assets finden und kommunizieren kann, sowie die Standardinformationen für den Inventory Dienst liefert. Später können über einen Link auch FW Updates, oder Zertifikate ausgerollt werden.

Container-Registries (z. B. von der Software "Docker") sind bereits bekannt, mit unterstützenden Funktionalitäten. Die Container-Technologie vereinfacht die Bereitstellung der Anwendungen, und gewährleisten die Trennung und Verwaltung der auf einem Rechner genutzten Ressourcen.

Docker bietet ein Repository, damit ist ein Satz gleichnamiger Images mit verschiedenen Tags, zumeist Versionen gemeint. Darüber hinaus bietet Docker eine Registry, zur Verwaltung der Repositories.

Der OT PROTOCOL SCANNER SERVICE 21 hält eine Vielzahl von OT PROTOCOL SCANNERN in einem Register (Registry) 22 bereit. Das Register kann durch weitere PROTOCOL SCANNER verschiedener Hersteller sicher erweitert werden. Die Registry enthält auch Metadaten über die Korrespondenz zwischen den Scannern und OT-Geräten, auf die der Scanner zugeschnitten ist.

Um den Datenaustausch in der Cloud 20 sicher zu gestalten, sind geeignete SECURITY 23 Maßnahmen ebenfalls in dem Dienst vorgesehen.

Die Kommunikation aus der Cloud wird über einen geeignet eingerichteten Netzübergang gesteuert. Das Gateway 30 stellt, allgemein gesagt, die Brücke zur Kommunikation zwischen mehreren internen oder auch externen Netzwerkabschnitten dar. Das hier verwendete FIELD MANAGEMENT GATEWAY 30 ist das Bindeglied zwischen den beiden zuvor beschriebenen Elementen 10, 21 in der Cloud und den OT-Geräten 41, 42, 43 vor Ort.

Das FIELD MANAGEMENT GATEWAY 30 enthält die folgenden Funktionalitäten:
- INVENTORY CLIENT 31
- OT PROTOCOL SCANNER MANAGER 32
- OT SCANNER SERVICE 34
- OT PROTOCOL SCANNER 35, 35`

Ein Scan von OT-Geräten im Netzwerk wird üblicherweise ausgeführt, wenn es einen entsprechenden Scanauftrag gibt, der im Cloud-Dienst 11 zugewiesen ist. Die Ausführung des Scans umfasst das aktive Scannen des Netzwerks mit OT-spezifischen Protokollen, um Geräte im Netzwerk zu erkennen und die Informationen zu sammeln.

Dabei werden Informationen über
- den (OT-)Gerätetyp,
- den Gerätehersteller,
- die Softwareversion des Geräts,
- die MAC-Adresse des Geräts und
- die IP-Adresse des Geräts
im INVENTORY CLIENT 31 gesammelt.

Basierend auf den erkannten Gerätetypen werden gegebenenfalls zusätzliche OT PROTOCOL SCANNER 35, 35` angefordert und vom OT PROTOCOL SCANNER SERVICE 34 heruntergeladen die, entsprechend ihrer Metadaten, besser für das Gerät 41, 42, 43 geeignet sind. Diese Scanner können beispielsweise für das Gerät bzw. das Asset vom Hersteller selbst zur Verfügung gestellt werden. Danach wird der Scan automatisch mit den neu heruntergeladenen OT PROTOCOL SCANNERN 35, 35` wiederholt. Die Scanergebnisse werden in der INVENTORY CLIENT / Inventar-Client 31 Discovery-Anwendung in ein gemeinsames Format gebracht und über das FIELD MANAGEMENT GATEWAY 30 an die INVENTARDATENBANK 12 im INVENTURDIENST 10 gesendet.

Das anfängliche Scannen im OT SCANNER SERVICE 34 kann zunächst mit einem generischen Netzwerkscanner ausgeführt, um grundlegende Informationen zu identifizieren, ob vorhandene Geräte (Hersteller und Typ) vorhanden sind, und von welcher Art dieses Gerät und Software ist.

Basierend auf den abgerufenen Informationen fragt der OT PROTOCOL SCANNER MANAGER 32 die OT PROTOCOL SCANNER REGISTRY 22 der verfügbaren Protokollscanner in der Cloud-Anwendung nach einem Protokollscanner ab, der weitere Informationen von den spezifischen Anbietern extrahieren kann, die im Netzwerk gefunden wurden.

Ein OT PROTOCOL SCANNER SERVICE 22 stellt OT PROTOCOL SCANNER zur Verfügung, die auf OT-Geräte 41, 42, 43 verschiedener Hersteller und Typen zugeschnitten sind. Das OT PROTOCOL REGISTER im OT PROTOCOL SCANNER SERVICE kann von verschiedenen Anbietern befüllt und aktualisiert werden, um Softwarekomponenten bereitzustellen, die die meisten Informationen aus den spezifischen Geräten herausholen. Die Identitätsinformationen und Eigenschaften von OT-Geräten verschiedener Hersteller und Typen werden im INVENTORY CLIENT in ein gemeinsames Format konvertiert und in der INVENTORY DATABASE im INVENTORY Service gespeichert, so dass der Benutzer allgemeine Informationen anzeigen und basierend darauf auch filtern kann.

Die beschriebene Vorrichtung und das zugehörige Verfahren ermöglichen es den Nutzern, alle OT-Geräte zu erkennen, die von einem Gateway-Gerät in der jeweiligen Installation des Industrieherstellers vor Ort erreicht werden können. Die Erkennung erfolgt unabhängig von Gerätetyp und Hersteller, wobei der Dienst Status- und Bestandsinformationen im gerätespezifischen Format über eine gemeinsame und stabile Programmieroberfläche sowie eine cloudbasierte Web-Benutzeroberfläche zentral an den Benutzer meldet.

Das (Asset) Gateway pollt gegebenenfalls auch Gatewayspezifische Erkennungsaufträge.

Es kann mehrere Asset Gateways geben. Die Gateway Instanzen, wie auch Asset Links werden über den Cloud dienst verwaltet, so dass man zum Beispiel einen Scan/Discover-Auftrag nur für einen bestimmten Asset-link anstoßen kann.

Asset Links müssen eine Geräteerkennungs-API implementieren, um die angeschlossenen, indirekt verwalteten Geräte im Netzwerk zu erkennen. Das Asset Gateway delegiert die Erkennungsanfrage über die Geräteerkennungs-API an den richtigen Asset Link.

Das Gateway bietet eine geeignete Schnittstelle, um Asset Links zu verbinden. Dies kann über Geräte-Grenzen verteilt (indirekt verwaltet) oder vollständig in das native verwaltete Gerät integriert werden.

Die OT Protokoll Scanner können beispielsweise als Docker-Container bereitgestellt werden.

Nach der Erkennung können die Benutzer die Geräte über den jeweiligen ermittelten Asset Link auf der Grundlage umfassender Geräte- und Statusinformationen identifizieren. Diese Geräte- und Statusinformationen umfassen Hersteller, Gerätetyp (z. B. SPS, HMI, Netzwerkrouter), Bestellnummer, Seriennummer, MAC-Adressen der Netzwerkschnittstellen sowie Software-, Firmware- und Hardwareversionen. Alle Informationen werden in der zentralisierten Inventarliste in der INVENTARDATENBANK 12 gesammelt, die vom Benutzer auch noch mit benutzerdefinierten Feldern erweitert werden kann. Die Inventarliste wird wahlweise über eine Web-Dashboard-Anwendung zugänglich gemacht, kann aber auch nahtlos in beliebige existierende Dashboard-Lösungen, zentrale IT-Asset-Management-Systeme oder andere geeignete Systeme integriert werden, durch Verwendung einer API. Auf diese Weise erhalten Benutzer Transparenz über den Gerätebestand und haben jederzeit und überall auf der Welt Zugriff auf die Gerätezustandsinformationen und die installierten Firmware-Versionen, indem sie einfach auf die richtigen APIs zugreifen.

## Patentansprüche

1. Verfahren zur Ermittlung und Verwaltung von Informationen über verfügbare Geräte- und/oder Software-Artefakte (41, 42, 43) in einem heterogenen industriellen System,
wobei eine Vielzahl von geeigneten Artefakt-Scannern in einem zentral gespeicherten Register (22) vorgehalten werden, und nach Empfang eines Scan-Auftrags
von einem Protokoll-Scanner-Manager (30) aus dem zentral gespeicherten Register (22) anhand erkannter Meta-Daten geeignete spezifische Artefakt-Scanner (35, 35`) aus dem Register (22) angefordert und angewendet werden, und
gewünschte Informationen über ermittelte Artefakt-Scanner (35, 35`) erkannt werden,
und erkannte Informationen über Geräte und/oder Software-Artefakte (41, 42, 43) in ein vorgegebenes Format konvertiert und in einem Inventar-Client (31) gespeichert werden und
von dem Inventar-Client (31) an eine zentral verwaltete Inventar-Datenbank (12) 1zur zentralen Speicherung gesendet werden.

2. Verfahren gemäß Patentanspruch 1,
**dadurch gekennzeichnet, dass**
zuvor mit einem ersten, generischen Scanner im heterogenen industriellen System vorhandene Geräte und/oder Software-Artefakte (41, 42, 43) ermittelt und mittels in den Geräte- und Software-Artefakten vorhandener Meta-Daten erkannt werden.

3. Verfahren gemäß einem der vorherigen Patentansprüche,
**dadurch gekennzeichnet, dass**
erkannte Informationen Daten beinhalten über
- Gerätetyp und/oder Art des Software-Artefakts (41, 42, 43)
- Hersteller des Gerätes und/oder Software-Artefakts (41, 42, 43)
- Aktuelle Version des Gerätes und/oder Software-Artefaktes (41, 42, 43)
- Netzwerk-Adresse des Gerätes und/oder Software-Artefakts (41, 42, 43).

4. Verfahren gemäß einem der vorherigen Patentansprüche,
**dadurch gekennzeichnet, dass**
das Geräte und/oder Software-Artefakte über einen ermittelten Asset Link auf der Grundlage von Geräte- und Statusinformationen identifizieret werden, wobei zumindest eine der folgenden Information enthalten ist:
- Hersteller,
- Gerätetyp,
- Bestellnummer,
- Seriennummer,
- MAC-Adressen der Netzwerkschnittstellen
- Software-, Firmware- und Hardwareversion.

5. Verfahren gemäß einem der vorherigen Patentansprüche,
**dadurch gekennzeichnet, dass**
die in dem vorgegebenen Format konvertierten und gespeicherten Informationen über Geräte und/oder Software-Artefakte (41, 42, 43) sortierbar, filterbar und abfragbar angeboten werden.

6. Computerprogrammprodukt geeignet zur Durchführung eines Verfahrens gemäß den Merkmalen eines der Patentansprüche 1 bis 5.

7. Signal geeignet und eingerichtet zur Übertragung eines Verfahrens gemäß den Merkmalen eines der Patentansprüchen 1 bis 6.

8. Vorrichtung (10) zur Ermittlung und Verwaltung von Informationen über verfügbare Geräte- und/oder Software-Artefakte in einem heterogenen industriellen System, mit einer zentral verwalteten Inventar-Datenbank (12) zur zentralen Speicherung, und mit Kommunikationsmitteln (11)
- zum Zugriff auf eine Vielzahl von geeigneten Artefakt-Scannern die in einem Register (22) vorgehalten werden, und nach Empfang eines Scan-Auftrags
- zur Anforderung und Anwendung von, anhand erkannter Meta-Daten ermittelter geeignete spezifische Artefakt-Scanner (35, 35`) aus dem Register (22), durch einen Protokoll-Scanner-Manager (30),
- Erkennen von gewünschten Informationen durch die ermittelten Artefakt-Scanner (35, 35`),
- Konvertierung von erkannten Informationen über Geräte und/oder Software-Artefakte (41, 42, 43) in ein vorgegebenes Format und Speicherung in einem Inventar-Client (31) und
- Empfang von dem Inventar-Client (31) an die Inventar-Datenbank (12) zur zentralen Speicherung.

9. Vorrichtung (10) gemäß Patentanspruch 8,
**dadurch gekennzeichnet, dass**
mit Kommunikationsmitteln (11) zuvor Informationen zu im heterogenen industriellen System vorhandenen Geräten und/oder Software-Artefakten (41, 42, 43) durch einen ersten, generischen Scanner angefragt, ermittelt und mittels in den Geräte- und Software-Artefakten vorhandener Meta-Daten erkannt wird.

10. Vorrichtung (10) gemäß einem der vorherigen Patentansprüche 8 oder 9,
**dadurch gekennzeichnet, dass**
erkannte Informationen Daten beinhalten über
- Gerätetyp und/oder Art des Software-Artefakts (41, 42, 43)
- Hersteller des Gerätes und/oder Software-Artefakts (41, 42, 43)
- Aktuelle Version des Gerätes und/oder Software-Artefaktes (41, 42, 43)
- Netzwerk-Adresse des Gerätes und/oder Software-Artefakts (41, 42, 43).

11. Vorrichtung (10) gemäß einem der vorherigen Patentansprüche 8 bis 10,
**dadurch gekennzeichnet, dass**
die Geräte und/oder Software-Artefakte über einen ermittelten Asset Link auf der Grundlage von Geräte- und Statusinformationen identifizieret werden, wobei zumindest eine der folgenden Information enthalten ist:
- Hersteller,
- Gerätetyp,
- Bestellnummer,
- Seriennummer,
- MAC-Adressen der Netzwerkschnittstellen
- Software-, Firmware- und Hardwareversion.

12. Vorrichtung (10) gemäß einem der vorherigen Patentansprüche 8 bis 11,
**dadurch gekennzeichnet, dass**
die in dem vorgegebenen Format konvertierten und gespeicherten Informationen über Geräte und/oder Software-Artefakte (41, 42, 43) sortierbar, filterbar und abfragbar angeboten werden.
